(19) Europäisches Patentamt
European Patent Office
Office européen des brevets

(11) EP 1 536 649 A2

(12) EUROPEAN PATENT APPLICATION

(43) Date of publication:
01.06.2005 Bulletin 2005/22

(51) Int Cl.⁷: $H04N\ 7/26$, H04N 7/50

(21) Application number: 04027708.9

(22) Date of filing: 22.11.2004

(84) Designated Contracting States:
AT BE BG CH CY CZ DE DK EE ES FI FR GB GR
HU IE IS IT LI LU MC NL PL PT RO SE SI SK TR
Designated Extension States:
AL HR LT LV MK YU

(30) Priority: 24.11.2003 KR 2003083744

(71) Applicant: LG Electronics Inc.
Seoul (KR)

(72) Inventor: Seo, Kwang Deok
Gyeonggi-Do (KR)

(74) Representative: von Hellfeld, Axel, Dr. Dipl.-Phys.
Wuesthoff & Wuesthoff
Patent- und Rechtsanwälte
Schweigerstrasse 2
81541 München (DE)

(54) **Apparatus and method for processing video for implementing signal to noise ratio scalability**

(57) A system and method for providing video processing and implementing signal-to-noise ratio scalability is provided. The apparatus comprises a first coder and a second coder. The first coder codes inputted image data utilizing a first quantization step for outputting quantized discrete cosine transform coefficients of the first coder. A second coder codes inputted image data utilizing a second quantization step for generating a difference between discrete cosine transform coefficients from the second coder and the quantized discrete cosine transform coefficients of the first coder.

FIG.4

EP 1 536 649 A2

**Description**

**BACKGROUND OF THE INVENTION**

**Field of the Invention**

The present invention relates to video processing and, more particularly, to processing video for implementing signal to noise ratio scalability for mobile terminals that are limited in resources such as available power and computational capacity.

**Description of the Related Art**

In general, scalability defined in MPEG standards is a function for reproducing one transmission image into various picture quality images according to a state of a decoding unit and a transmission path. In spite of high possibility of generation of an error, scalability is useful in a heterogeneous network environment.

The scalability is divided into spatial and temporal types of SNR. A spatial scalability is for dividing an image into a low-resolution base layer and a high resolution enhanced layer and coding two layers. A temporal scalability is for dividing images having different frame frequencies in the same spatial resolution. A signal to noise ratio (SNR) scalability is for dividing each pixel of an image by bit expression resolution and coding it.

To simultaneously transmit two different image signals, SNR scalability is utilized including a low picture-quality base layer and a high picture-quality enhancement layer. The base layer is requisite for reproducing the enhancement layer.

The base layer codes image data through coarse quantization and the enhancement layer quantizes differential data between original data and the data which has been coded in the base layer by a finer quantization step than a quantization step of the base layer, and codes it. Accordingly to reproduce the enhancement layer, the base layer is necessary.

In general, a decoding unit adopting the SNR scalability reproduces an image of high picture quality by adding data of the base layer and data of the enhancement layer. Even if data of the enhancement layer is not transmitted due to transmission failure, an image is reproduced only with the base layer, thereby preventing a situation that the image is not reproduced at all.

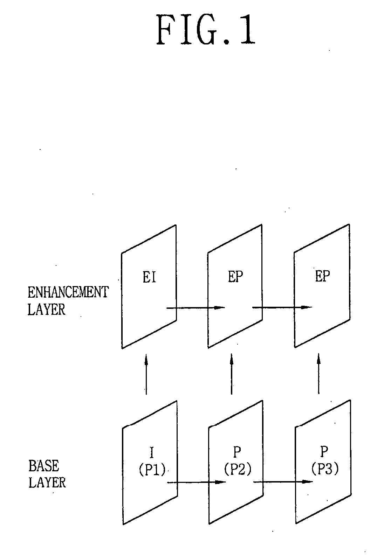

Referring to Fig. 1, the enhancement layer of the SNR scalability includes an EI (Enhanced I)-picture and an EP (Enhanced P)-picture. These enhancement layers produce improved picture quality compared to each screen of the base layer. P1, P2 and P3 indicate an order of screens. P1 is the 1-picture and P2 and P3 are P-picture.

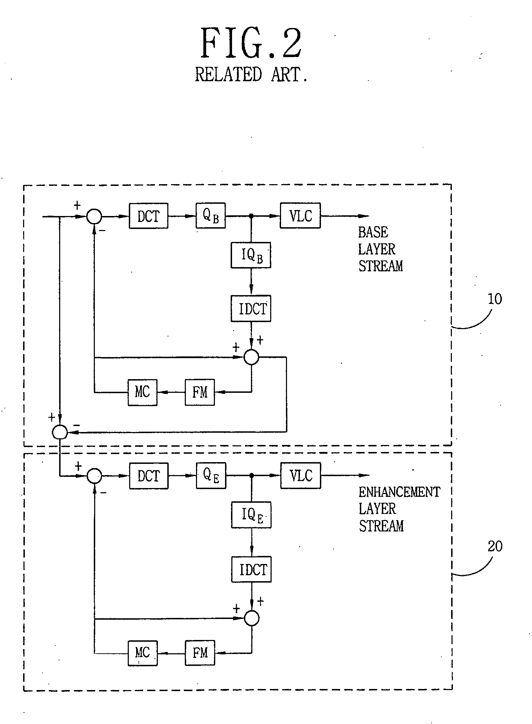

Referring to Fig. 2, a first conventional video coding unit implements SNR scalability. For coding a base layer and an enhancement layer, the video coding unit includes two general coding units each having a different quantization step. The video coding unit includes a base layer coding unit 10 that codes image data using a large quantization step to generate a base layer. An enhancement layer coding unit 20 reproduces the image data which has been coded to the base layer, calculates a difference between the data and the original image data, and codes the difference using a small quantization step. The quantization step of the enhancement layer is smaller than that of the base layer quantization step. The two general coding units occupy a large real estate area, which units would require an undesirable increase in size of a mobile terminal.

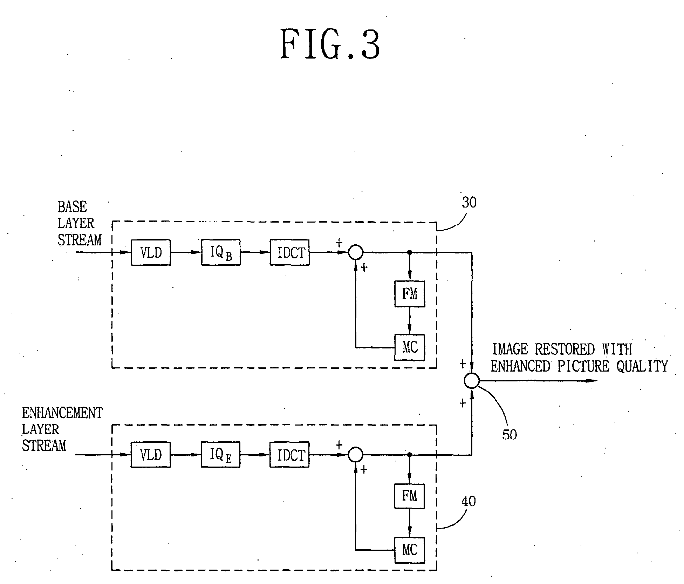

Referring to Fig. 3, a second conventional video decoding unit includes a base layer decoding unit 30 for receiving and decoding a video stream of the base layer. An enhancement layer decoding unit 40 receives and decodes a video stream of the enhancement layer. An adder 50 adds the two video streams each outputted from the base layer decoding unit 30 and the enhancement layer decoding unit 40. The adder 50 outputs the original image data. The implementation of this conventional decoder is very complex and would produce a strain on the available resources of a mobile terminal.

Therefore, there is a need for a system that overcomes the above problems and provides advantages over other systems.

**SUMMARY OF THE INVENTION**

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

The present invention provides a video processing apparatus and method for implementing signal-to-noise transform scalability. The apparatus includes a first coder provides a first quantization step for coding image data. A second coder provides a second quantization step for coding a difference between discrete cosine transform coefficients of the image data and an outputted quantized coefficients from the first coder.

To achieve at least these advantages in whole or in parts, there is further provided a video processing apparatus for implementing SNR scalability including: a first VLD (Variable Length Decoding) unit for receiving a first layer stream and decoding a variable length of it; and a decoding unit for decoding image data by adding the image data outputted from the first VLD unit to a de-quantized second layer stream.

In one embodiment, an apparatus providing video processing for implementing signal-to-noise ratio scalability, the apparatus comprising a first coder coding inputted image data utilizing a first quantization step for outputting quantized discrete cosine transform coefficients of the first coder; and a second coder coding inputted image data utilizing a second quantization step for generating a difference between discrete cosine transform coefficients from the second coder and the quantized discrete cosine transform coefficients of the first coder.

The second quantization step is smaller than the first quantization step and/or the inputted image data to the second coder is the same as the image data inputted to the first coder.

In one embodiment, the second coder further comprises a subtracter for subtracting the quantized discrete cosine transform coefficients from the first coder from the discrete cosine transform coefficients of the inputted image, and an adder for adding together the quantized discrete cosine transform coefficients outputted from the first coder, the discrete cosine transform coefficients of the second coder, and image data obtained by motion-compensating a previous data frame.

In another embodiment, a video processing apparatus for implementing signal-to-noise ratio scalability comprising a first variable length decoding unit for receiving, processing, and outputting a decoded first variable length layer stream, and a decoding unit for adding the decoded first variable length layer stream and a de-quantized second layer stream. In yet another embodiment, the second layer stream includes image data having a quantization step smaller than that of the first variable length layer stream.

A processing method for implementing signal-to-noise ratio scalability for quantizing image data of video by comprises quantizing image data using a first quantization step, discrete cosine-transforming the image data, subtracting the image data quantized by the first quantization step from the discrete cosine-transformed inputted image data to produce a subtracted image data, and quantizing the subtracted image data using a second quantization step.

In another embodiment, the method further comprises providing a second quantization step that is smaller than the first quantization step.

In one embodiment, a method for processing video implementing SNR scalability of a video processing apparatus for implementing signal-to-noise scalability for restoring image data received through mutually different layer streamsi is provided. The method comprises decoding image data received through a first layer stream, decoding image data received through a second layer stream and de-quantizing a decoded image data to produce a de-quantized second layer stream, adding the de-quantized second layer stream and a coded first layer stream for producing added image data, and inversely discrete cosine-transforming the added image data for restoring the video.

In yet another embodiment, the method further comprises providing a second quantization step for the second layer stream smaller than that of a first quantization step of the first layer stream.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

Features, elements, and aspects of the invention that are referenced by the same numerals in different figures represent the same, equivalent, or similar features, elements, or aspects in accordance with one or more embodiments.

Fig. 1 is a block diagram illustrating general principles of conventional signal-to-noise ratio scalability of a video.

Fig. 2 is a block diagram illustrating a conventional video coder for implementing signal-to-noise ratio scalability.

Fig. 3 is a flow diagram illustrating another conventional video decoder for implementing SNR scalability.

Fig. 4 is a flow diagram illustrating a video coder for implementing signal-to-noise ratio scalability in accordance with an embodiment of the present invention.

Fig. 5 is a flow diagram illustrating a video decoder for implementing signal-to-noise ratio scalability in accordance with an embodiment of the present invention.

Fig. 6 is a block diagram illustrating a mobile communication device using the method of the present invention.

## DETAILED DESCRIPTION OF THE PREFERRED EMBODIMENTS

The invention relates to processing video implementing signal-to-noise ratio scalability of a mobile terminal.

Although the invention is illustrated with respect to a mobile terminal for processing video, it is contemplated that the invention may be utilized anywhere it is desired for transmitting, receiving, or processing audio and/or video. Reference will now be made in detail to the preferred embodiments of the present invention, examples of which are illustrated in the accompanying drawings.

The present invention provides for processing video for implementing signal-to-noise ratio scalability capable of reducing complexity of a unit having limited resources such as available power or calculation capability while maintaining the same performance as a related art video decoding unit.

The present invention provides a modified structure video decoder with a substantially reduced complexity compared to a related video decoder in implementing signal-to-noise ratio scalability of video. The present invention is mountable in a mobile terminal such as the receiving side of the terminal.

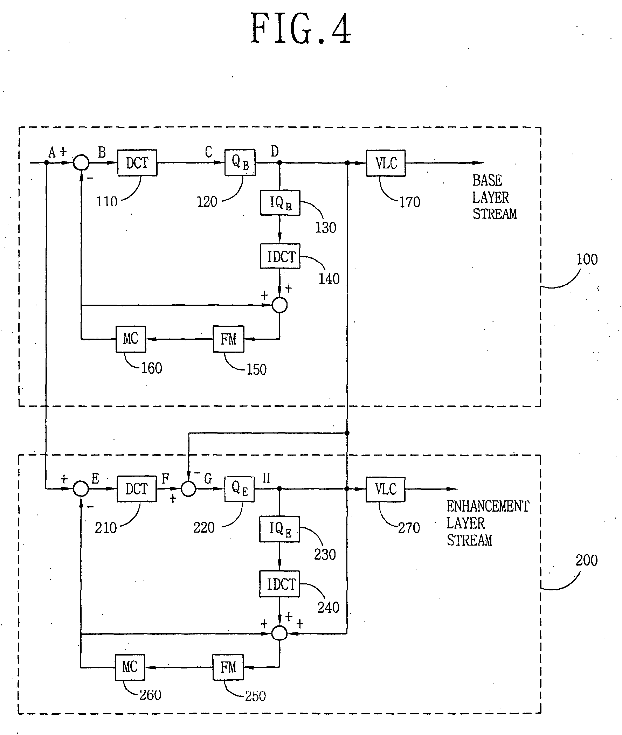

Referring to Fig. 4, the video coder for implementing signal-to-noise ratio scalability comprises a base layer coding unit 100 and an enhancement layer coding unit 200. The base layer coding unit 100 quantizes image data using a first quantization step to generate base layer data. The base layer coding unit comprises a first discrete cosine transform (DCT) unit 110. The first discrete cosine transform unit 110 converts the image data into discrete cosine transform coefficients. The unit 110, for example, converts motion-compensated image data and/or image data into discrete-cosine transform coefficients. A first quantizer 120 quantizes the discrete cosine transform data using a first quantization step.

A first frame memory 150 stores data obtained by restoring the quantized data through a first dequantizer 130 though a first IDCT (Inverse DCT) unit 140. The first frame memory 150 restores data and motion-compensated data. A first motion compensating unit 160 performs motion compensation on the image data stored in the first frame memory 150. The data quantized through the first quantizer 120 or an addition result of the added data and the motion-compensated data. A first variable length coding unit 170 processes the first quantizer output signal and outputs the result as a base layer stream.

The enhancement layer coding unit 200 codes a data difference between the quantized data in the base layer coding unit 100 and data obtained by discrete-cosine transform of the image data using a second quantization step that is smaller than the first quantization step. The enhancement layer coding unit 200 includes a second discrete coefficient transform unit 210. The second discrete coefficient transform unit 210 transforms image data output from the base layer coding unit 100. The second discrete cosine transform unit 240 transforms the image data and motion-compensated image data. A second quantizer 220 quantizes the discrete-cosine transform coefficients output from the second descrete coefficient transform unit 240. The discrete cosine transform coefficients are subtracted from the quantized discrete transform coefficients of the first coder.

The second quantizer 220, using a second quantization step, quantizes the output of the subtracted. A second frame memory 250 stores data obtained restoring the image data from the second quantizer 220 processed through a second dequantizer 230 and the second IDCT unit 240. A second motion compensating unit 260 performs motion compensation on image data stored in the second frame memory 250. The quantization step ($Q_E$) of the second quantizer 220 is smaller than the quantization step ($Q_B$) of the first quantizer 220. A second variable length coding unit 270 processes an output of the second quantizer 220 producing an enhancement stream.

In one exemplary embodiment of video coder operation, the image data is directly inputted to the enhancement layer coding unit 200 as well as to the base layer coding unit 100. Data is quantized using a first quantization step in the first DCT unit 110. The first quantizer 120 of the base layer coding unit 100 is subtracted from image data that has been discrete-cosine-transformed through the enhancement layer coding unit 200. The result is inputted to the second quantizer 220. The data quantized to the certain quantizer step in the second quantizer unit 220 is restored through the second de-quantizer 230 and the second IDCT unit 240, added to the data quantized in the base layer coding unit 100, and then, stored in the second frame memory 250.

In one embodiment, in the video coder the same image data is inputted to the base layer coding unit and the enhancement layer coding unit. The image data being dequantized in the base layer coding unit is subtracted from the data that has been discrete-cosine-transformed in the enhancement layer coding unit. The subtracted data is quantized.

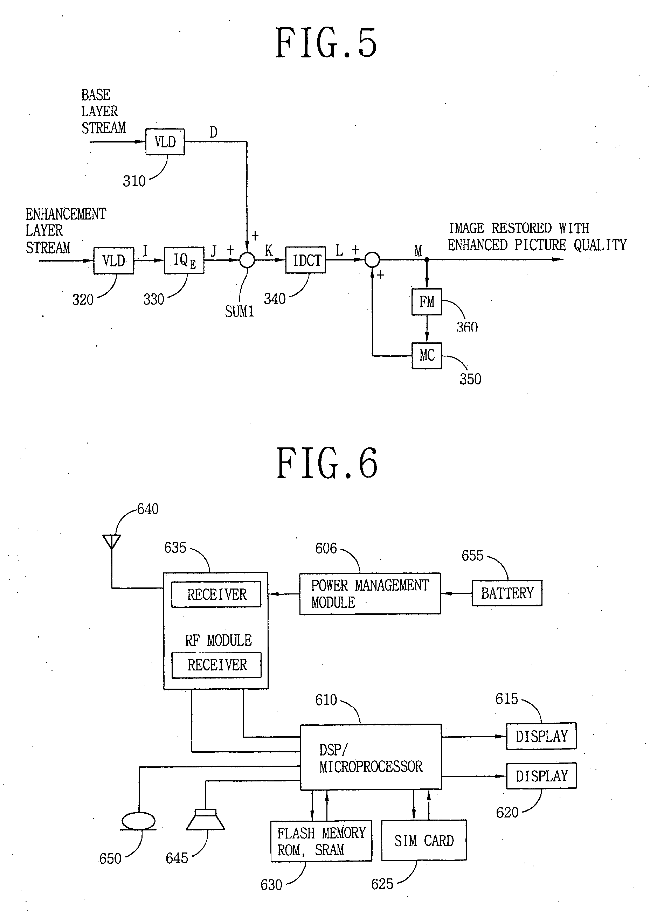

Referring to Fig. 5, a first variable length decoder (VLD) unit 310 decodes a received base layer stream. A second VLD unit 320 decodes a received enhancement layer stream. A dequantizer 330 dequantizes the decoded enhancement layer data from the second VLD unit 320. An adder (SUM1) sums an output from the dequantizer 330 and the decoded base layer data. An inverse discrete cosine transform (IDCT) unit 340 performs an inverse discrete cosine transform on an adder output for restoring the image data. A motion compensating unit 350 motion-compensates the data outputted from the IDCT unit 340.

The present invention video decoder has a reduced complexity based decoding unit for decoding the base layer stream.

The present invention video coder and decoder maintain similar performance as a conventional video processor. The following equations exemplify this improved performance of the present invention.

Image data restored/outputted form the related art video decoder includes noise due to the quantization parameter $Q_E$ at each image frame. In this case, the restored/outputted image data corresponds to the base layer data (P1, P2 and P3) of Figure 1, which can be expressed by $P1+\alpha_{1E}$, $P2+\alpha_{2E}$, $P3+\alpha_{3E}$, wherein $\alpha_{iE}$ signifies distortion generated from the ith frame due to the quantization parameter $Q_E$.

The I-frame (PI) that has been coded through the video coder of Figure 4 in accordance with the present invention is decoded through the video decoder of Figure 5 as provided below.

$$D : Q_B(DCT(P1)) \tag{1}$$

$$G : DCT(P1) - Q_B(DCT(P1)) \tag{2}$$

$$H : Q_E[DCT(P1) - Q_B(DCT(P1))] \tag{3}$$

Equation (1) expresses image data outputted through the first DCT unit 110 and the first quantizer 120, equation (2) expresses image data inputted to the second quantizer 220 of the enhancement layer coder 200, and equation (3) expresses image data outputted through the second quantizer 220. The image data of equation (1) and the image data of equation (3) are variable-length-coded, divided into a base layer stream and an enhancement layer stream, and then, transmitted to the video decoder, respectively.

$$J : Q_E^{-1}[Q_E[DCT(P1) - Q_B(DCT(P1))]] = DCT(P1) - Q_B(DCT(P1))+\Delta_{QE} \tag{4}$$

Equation (4) is image data obtained by variable-length-decoding the image data of equation (3) which has been variable-length-coded and de-quantizing it. Herein, $\Delta_{QE}$ signifies distortion generated due to the quantization parameter $Q_E$.

$$K : DCT(P1) + \Delta_{QE} \tag{5}$$

$$L \text{ or } M : P1+DCT^{-1}(\Delta_{QE})=P1+\alpha_{1E} \tag{6}$$

Equation (5) is image data obtained by adding image data obtained by variable-length-decoding equation (1) which has been variable-length-coded and the image data of equation (4), and equation (6) is image data obtained by inversely discrete-cosine-transforming equation (5). Herein, since the I-frame is not motion-predicted by a motion vector, image data before motion compensation is the same as image data after motion compensation.

As expressed in equation (6), the I-frame outputted from the video decoder in accordance with the present invention includes distortion ($\alpha_{1E}$) generated from the first frame, and has the same picture quality as the I-frame outputted from the related art video decoder.

The P-frame that has been coded through the video coder of Figure 4 in accordance with the present invention is decoded through the video decoder of Figure 5 as follows.

The P-frame is coded and decoded based on prediction coding. Namely, the P-frame is coded and decoded based on $P1+\alpha_{1B}$ stored in the first frame memory of the base layer coding unit of Figure 4 and $P1+\alpha_{1E}$ store din the second frame memory of the enhancement layer coder.

$$B : P2-MC(P1+\alpha_{1B}'MV1) \tag{7}$$

$$C : DCT[P2\text{-MC}(P1+\alpha_{1B}{'}MV1)] \tag{8}$$

$$D : Q_B [DCT[P2\text{-MC}(P1+\alpha_{1B}{'}MV1)]] \tag{9}$$

Wherein, $MC(P,MV)$ means motion compensation of screen P using a motion vector MV.

Equation (7) expresses image data obtained by motion-compensating the P-frame inputted to the base layer coder by using previous frame data stored in the first frame memory 150, and equation (9) expresses the motion-compensated image data which is discrete-cosine-transformed and then quantized.

$$E : P2\text{-}MC(P1+\alpha_{1E}{'}MV2) \tag{10}$$

$$F : DCT[P2\text{-MC}(P1+\alpha_{1E}{'}MV2)] \tag{11}$$

$$G : DCT[P2\text{-MC}(P1+\alpha_{1E}{'}MV2)] - Q_B [DCT[P2\text{-MC}(P1+\alpha_{1B}{'}MV1)]] \tag{12}$$

$$H : Q_E [DCT[P2\text{-MC}(P_1+\alpha_{1E}{'}MV2)] - Q_B [DCT[P2\text{-MC}(P1+\alpha_{1B}{'}MV1)]]] \tag{13}$$

Equation (10) expresses image data obtained motion-compensating the P-frame inputted from the enhancement layer coding unit 200 by using previous frame data stored in the second frame memory 250, equation (12) expresses image data obtained by subtracting the image data (equation (9)) outputted from the base layer coding unit 100 from the image data obtained by discrete-cosine-transforming the motion-compensated image data, equation (13) expresses image data quantized through the second quantizer 220.

$$J : DCT[P2\text{-}MC(P1+\alpha_{1E}{'}MV2)]] - Q_B [DCT[P2\text{-MC}(P1+\alpha_{1B}{'}MV1)]] + \Delta_{QE} \tag{14}$$

$$K : DCT[P2\text{-MC}(P1+\alpha_{1E}{'}MV2)] + \Delta_{QE} \tag{15}$$

$$L : P2\text{-MC}(P1+\alpha_{1E}{'}MV2)]] + DCT^{-1}(\Delta_{QE}) \tag{16}$$

$$M : P2 + DCT^{-1}(\Delta_{QE}) = P2 + \alpha_{2E} \tag{17}$$

Equation (14) is image data obtained by de-quantizing equation (13) transmitted through the enhancement layer stream, equation (15) is image data obtained by adding the de-quantized equation (14) and equation (9) transmitted through the base layer stream, and equation (16) is image data obtained by transforming equation (15) through the IDCT unit 340.

Equation (17) is finally restored image data obtained by adding image data which has been motion-compensated by using the previous frame data stored in the frame memory 360 to equation (15). The restored image data includes distortion ($\alpha_{2E}$) generated from the second frame due to the quantization parameter, and has the same picture quality as the P-frame outputted from the related art video decoder.

The following are examples including a mobile communication device and a mobile communication network using the system and the method of the present invention.

Referring to Fig. 6, the mobile communication device 600 comprises a processing unit 610 such as a microprocessor or digital signal processor, an RF module 635, a power management module 606, an antenna 640, a battery 655, a display 615, a keypad 620, a storage unit 630 such as flash memory, ROM or SRAM, a speaker 645 and a microphone 650.

A user enters instructional information, for example, by pushing the buttons of a keypad 620 or by voice activation using the microphone 650. The processing unit 610 receives and processes the instructional information to perform the appropriate function. Operational data may be retrieved from the storage unit 630 to perform the function. Furthermore, the processing unit 610 may display the instructional and operational information on the display 615 for the user's reference and convenience.

The processing unit 610 issues instructional information to the RF module 635, to initiate communication, for example, transmit radio signals comprising voice communication data. The RF module 635 comprises a receiver and a transmitter to receive and transmit radio signals. The antenna 640 facilitates the transmission and reception of radio signals. Upon receive radio signals, the RF module 635 may forward and convert the signals to baseband frequency for processing by the processing unit 610. The processed signals would be transformed into audible or readable information outputted via the speaker 645.

The processing unit 610 performs the methods and provides the systems as illustrated in Figures 2-5. As an example, the processing unit 610 adapted for communicating a received message having an allocated reference decoding image data received through a first layer stream, decoding image data received through a second layer stream and de-quantizing a decoded image data to produce a de-quantized second layer stream, adding the de-quantized second layer stream and a coded first layer stream for producing added image data; and inversely discrete cosine-transforming the added image data for restoring the video.

Some features, as described above in Figure 2-5, may be incorporated as well into the processing unit 610.

The processing unit 610 stores the messages received from and messages transmitted to other users in the storage unit 630, receives a conditional request for message input by the user, processes the conditional request to read data corresponding to the conditional request from the storage unit. The processing unit 610 outputs the message data to the display unit 615. The storage unit 630 is adapted to store message data of the messages both received and transmitted.

Although the present invention is described in the context of a consumer product such as a MP3 player, the present invention may also be used in any wired or wireless communication systems using mobile devices, such as PDAs and laptop computers equipped with wired and wireless wireless communication capabilities. Moreover, the use of certain terms to describe the present invention should not limit the scope of the present invention to certain type of wireless communication system, such as UMTS. The present invention is also applicable to other wireless communication systems using different air interfaces and/or physical layers, for example, TDMA, CDMA, FDMA, WCDMA, etc.

The preferred embodiments may be implemented as a method, system or article of manufacture using standard programming and/or engineering techniques to produce software, firmware, hardware, or any combination thereof. The term "article of manufacture" as used herein refers to code or logic implemented in hardware logic (e.g., an integrated circuit chip, Field Programmable Gate Array (FPGA), Application Specific Integrated Circuit (ASIC), etc.) or a computer readable medium (e.g., magnetic storage medium (e.g., hard disk drives, floppy disks, tape, etc.), optical storage (CD-ROMs, optical disks, etc.), volatile and non-volatile memory devices (e.g., EEPROMs, ROMs, PROMs, RAMs, DRAMs, SRAMs, firmware, programmable logic, etc.).

Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The logic implementation shown in the figures described specific operations as occurring in a particular order. In alternative implementations, certain of the logic operations may be performed in a different order, modified or removed and still implement preferred embodiments of the present invention. Moreover, steps may be added to the above described logic and still conform to implementations of the invention. Further, with respect to the claims, it should be understood that any of the claims described below may be combined for the purposes of the present invention.

The foregoing embodiments and advantages are merely exemplary and are not to be construed as limiting the present invention. The present teaching can be readily applied to other types of systems. The description of the present invention is intended to be illustrative, and not to limit the scope of the claims. Many alternatives, modifications, and variations will be apparent to those skilled in the art. Accordingly, the invention is not limited to the precise embodiments described in detail hereinabove.

**Claims**

1. A processing method for implementing signal-to-noise ratio scalability for image data of a video, the processing method comprising:

generating a discrete cosine-transform of image data;
quantizing the discrete cosine-transform of the image data using a first quantization step for producing a first quantized image data; and
subtracting the first quantized image data from the discrete cosine-transform image data to produce subtracted image data.

2. The method of claim 1, further comprising quantizing the subtracted image data using a second quantization step for outputting a second quantized image.

3. The method of claim 2, wherein the second quantization step is smaller than the first quantization step.

4. A processing method for implementing signal-to-noise ratio scalability for image data of a video, the processing method comprising:

generating a first discrete cosine-transform of a first image data;
generating a second discrete cosine-transform of a second image data;
quantizing the first discrete cosine-transform of the first image data using a first quantization step for producing a first quantized image data; and
subtracting the first quantized image data from the second discrete cosine-transform image data to produce subtracted image data.

5. The method of claim 4, further comprising quantizing the subtracted image data using a second quantization step for outputting a second quantized image.

6. The method of claim 5, wherein the second quantization step is smaller than the first quantization step.

7. The method of claim 4, wherein the first image data and the second image data are identical.

8. The method of claim 5, further comprising:

adding the first quantized image data, and the second quantized image data to produce an second adder output; and
subtracting the second adder output from the second image data.

9. The method of claim 5, further comprising:

adding at least a portion of the first quantized image data, the second quantized image data, and image data obtained from motion-compensating a previous data frame to produce a second adder output; and
subtracting the second adder output from the second image data.

10. The method of claim 5, further comprising:

adding at least a portion of the first discrete-cosine transform coefficients and image data obtained from motion-compensating of a previous data frame to produce a first adder output; and
subtracting the first adder output from the first image data.

11. The method of claim 5, further comprising:

adding the first discrete-cosine transform coefficient and image data obtained from motion-compensating a previous data frame to produce a first adder output, image data obtained from motion-compensating a previous data frame to produce an adder output; and
subtracting the adder output from the first image data.

12. An apparatus providing video processing for implementing signal-to-noise ratio scalability, the apparatus comprising:

a first coder for coding inputted image data using a first quantization step and for outputting first quantized discrete-cosine transform coefficients; and

a second coder for coding inputted image data using a second quantization step for generating a difference between the first quantized discrete-cosine transform coefficients and second discrete cosine-transform coefficients.

13. The apparatus of claim 12, wherein the second quantization step is smaller than the first quantization step.

14. The apparatus of claim 12, wherein the inputted image data to the second coder is the same as the inputted image data to the first coder.

15. The apparatus of claim 12, wherein the first coder further comprises:

an first summer for adding at least a portion of the first discrete-cosine transform coefficients and image data obtained from motion-compensating a previous frame to produce a first summer output; and
a first subtractor for subtracting the first summer output from the first image data.

16. The apparatus of claim 12, wherein the second coder further comprises:

a second summer for adding the quantized discrete-cosine transform coefficients outputted from the first processor and the discrete-cosine transform coefficients of the second processor to produce a summer output; and
a second subtractor for subtracting the second summer output from the second image data.

17. A video processing apparatus for implementing signal-to-noise ratio scalability comprising:

a first variable length decoding unit for receiving, processing, and outputting a decoded first variable length layer stream; and
a decoding unit for adding the decoded first variable length layer stream and a de-quantized second layer stream.

18. The apparatus of claim 17, wherein the second layer stream comprises image data having a quantization step smaller than that of the first variable length layer stream.

19. The apparatus of claim 17, wherein the decoding unit comprises:

a second variable length decoding unit for receiving and decoding the second layer stream;
a de-quantizer for de-quantizing the image data that has been decoded through the second variable length decoding unit;
an adder for adding the de-quantized image data and the decoded first variable length layer stream and outputting the results as an output adder image data; and
an inverse discrete cosine-transform unit for inversely discrete-cosine-transforming the output adder image data to restore the image data.

20. A video processing apparatus for implementing signal-to-noise ratio scalability of image data, the apparatus comprising:

a video coding unit for dividing image data into a first layer stream and a second layer stream and transmitting the layers through the first and the second layer stream, wherein the first layer stream and the second layer stream have different quantization steps; and
a video decoding unit for adding decoded image data from the first layer stream and decoded and de-quantized image data from the second layer stream to restore the video.

21. The apparatus of claim 20, wherein the video decoding unit further comprises:

a first coder for coding image data using a first quantization step;
a discrete cosine transform unit for receiving and performing a discrete cosine transform on the image data input to the first coder;
a subtracter for subtracting the discrete cosine transform coefficient transform image data and the quantized image data from the first quantization step;
a quantizer for quantizing image data added by a second quantization step; and

an adder for restoring the image data quantized by the second quantization step, and adding the image data outputted from the first coder and the image data obtained by motion-compensating a previous data frame.

22. The apparatus of claim 20, wherein the second quantization step is smaller than the first quantization step.

23. The apparatus of claim 20, wherein the video decoding unit comprises:

a first variable length decoding unit for receiving and decoding the first layer stream;
a second variable length decoding unit for receiving and decoding the second layer stream;
an adder for adding image data which has been decoded in the second variable length decoding unit and then de-quantized to the image data decoded in the first variable length decoding unit; and
an inverse discete cosine transform unit for inversely discrete-cosine-transmitting the image data outputted from the adder.

24. The apparatus of claim 20, wherein the second layer stream includes image data quantized by a smaller quantization step than the first layer stream.

25. A method for processing video implementing signal to noise scalability of a video processing apparatus for implementing signal-to-noise scalability for restoring image data received through mutually different layer streams, the method comprising:

decoding image data received through a first layer stream;
decoding image data received through a second layer stream and de-quantizing a decoded image data to produce a de-quantized second layer stream;
adding the de-quantized second layer stream and a coded first layer stream for producing added image data; and
inversely discrete cosine-transforming the added image data for restoring the video.

26. The method of claim 23, further comprising providing a second quantization step for the second layer stream smaller than that of a first quantization step of the first layer stream.

27. A mobile communication system for managing messages received from and transmitted to another user by a user of the mobile communication system, the mobile communication system comprising:

an RF module comprising a transmitter to send the transmitted messages from a user and a receiver for receiving messages from another user;
means for decoding image data received through a first layer stream;
means for decoding image data received through a second layer stream and de-quantizing a decoded image data to produce a de-quantized second layer stream;
means for adding the de-quantized second layer stream and a coded first layer stream for producing added image data; and
means for inversely discrete cosine-transforming the added image data for restoring the video.

# FIG.1

# FIG.2

RELATED ART.

# FIG.3

# FIG.4

# FIG.5

BASE
LAYER
STREAM → | VLD | — D
310

ENHANCEMENT
LAYER
STREAM → | VLD | I | $IQ_E$ | J + → ( + ) K → | IDCT | L + → ( ) M → IMAGE RESTORED WITH ENHANCED PICTURE QUALITY
320   330   SUM1   340

| FM |
360

| MC |
350

# FIG.6

640

635

606

655

| RECEIVER |   | POWER MANAGEMENT MODULE | ← | BATTERY |

RF MODULE

| RECEIVER |

610   615

| DSP/ MICROPROCESSOR | → | DISPLAY |
→ | DISPLAY |
620

650   645

| FLASH MEMORY ROM, SRAM |   | SIM CARD |

630   625